**Europäisches Patentamt**

**European Patent Office**

**Office européen des brevets**

(19)

(11) Veröffentlichungsnummer : **0 074 427**
**B1**

(12) **EUROPÄISCHE PATENTSCHRIFT**

(45) Veröffentlichungstag der Patentschrift :
20.02.85

(51) Int. Cl.⁴ : **H 02 B   1/04**

(21) Anmeldenummer : **81107259.4**

(22) Anmeldetag : **15.09.81**

(54) Vorrichtung zum Befestigen eines elektrischen Gerätes, insbesondere eines Nockenschalters, an einer Montageplatte.

(43) Veröffentlichungstag der Anmeldung :
23.03.83 Patentblatt 83/12

(45) Bekanntmachung des Hinweises auf die Patenterteilung : 20.02.85 Patentblatt 85/08

(84) Benannte Vertragsstaaten :
AT BE CH DE FR GB IT LI LU NL SE

(56) Entgegenhaltungen :
DE-A- 2 816 450
FR-A- 2 134 560
GB-A- 2 000 912

(73) Patentinhaber : **Square D Starkstrom GmbH**
**D-5277 Marienheide-Rodt (DE)**

(72) Erfinder : **Ludwig, Bernd**
**Am Rohbusch 12**
**D-5277 Marienheide (DE)**

(74) Vertreter : **Köhne, Friedrich, Dipl.-Ing.**
**Postfach 250265 Lothringer Strasse 81**
**D-5000 Köln 1 (DE)**

## Beschreibung

Die Erfindung bezieht sich auf eine Vorrichtung zum Befestigen eines elektrischen Gerätes, insbesondere eines Nockenschalters, an einer mit einer Bohrung versehenen Montageplatte.

Es ist herkömmliche Technik, daß elektrische Geräte einzeln oder meist in Reihen neben- und/oder übereinander auf Montageplatten dadurch befestigt werden, daß ein Teil des Gerätes mit den Bedienungs- oder Anzeigeelementen aus der Vorderseite der Montageplatte hervorragt, während der eigentliche Schaltteil des Gerätes mit den elektrischen Anschlüssen und der Verdrahtung auf der Rückseite der Montageplatte angeordnet ist. Die hier angesprochenen Geräte werden in der Fachwelt als Befehls- und Meldegeräte bezeichnet. Bevorzugt ist hier die Anwendung bei Nockenschaltern. Montageplatten finden sich üblicherweise in Schaltschränken, sie können aber auch als freistehende Wandplatten oder als Platte eines Schaltpultes ausgebildet sein. Es gibt nun bereits zalreiche Konstruktionen zum Befestigen von elektrischen Geräten an derartigen Montageplatten. Normalerweise werden die Geräte durch die Bohrung der Montageplatte hindurchgeführt und dann mit der Montageplatte verschraubt. Dies ist aber sehr aufwendig, umständlich und zeitraubend, weil für diese Arbeiten bei großen Montageplatten zwei Personen erforderlich sind, nämlich eine Person, die das Gerät von der Vorderseite durch die Bohrung der Montageplatte hindurchführt und eine andere Person, die dann auf der Rückseite der Montageplatte die Befestigung vornimmt. Zur Arbeitserleichterung sind daher schon zahlreiche Konstruktionen vorgeschlagen worden, die eine Befestigung der Geräte durch eine Person ermöglichen. Hierzu gehören zum Beispiel Konstruktionen, bei denen das Gerät im wesentlichen aus zwei Teilen besteht, die durch Bajonettverschluß miteinander verbunden werden können. Aber auch diese bekannten Konstruktionen sind sehr bau- und arbeitsaufwendig.

Der Erfindung liegt dem gegenüber die Aufgabe zugrunde, eine Vorrichtung zu schaffen, die sehr einfach aufgebaut ist, einfach zu handhaben ist und für die verschiedensten Ausführungen und Gerätelängen anwendbar ist.

Die gestellte Aufgabe wird, ausgehend von der zu Anfang erläuterten Vorrichtung dadurch gelöst, daß an dem montageplattenseitigen Stirnende des Gerätes eine Kupplungsplatte mit einer Feder befestigt ist und daß ein von außen durch die Bohrung hindurchführbares Einsatzgehäuse vorgesehen ist, welches zum einen mit einer mit dem Rand der Bohrung und zum anderen mit der Feder der Kupplungsplatte zusammenwirkenden Rastvorrichtung ausgestattet ist.

Vorteilhafte Ausgestaltungen der Erfindung ergeben sich aus den Unteransprüchen.

In der Zeichnung ·ist ein Ausführungsbeispiel der Erfindung im Schema dargestellt, und zwar zeigen

Figur 1 eine Draufsicht auf ein an einer Montageplatte befestigtes Gerät,

Figur 2 eine Seitenansicht hierzu gemäß Pfeil II in Figur 1,

Figur 3 eine Draufsicht auf das Gerät gemäß Figur 1, wobei die einzelnen Bauteile mit Abstand voneinander dargestellt sind,

Figur 4 eine Ansicht gemäß Pfeil IV in Figur 3 in vergrößertem Maßstab,

Figur 5 einen Vertikalschnitt durch die Klemmschraube gemäß Figur 3 in vergrößertem Maßstab,

Figur 6 eine Seitenansicht eines Einzelteiles in vergrößertem Maßstab,

Figur 7 eine Ansicht eines Einzelteiles mit aufgeschobenen Berührungsschutzdeckel,

Figur 8 eine Seitenansicht auf den Berührungsschutzdeckel und

Figur 9 eine Draufsicht auf den Berührungsschutzdeckel.

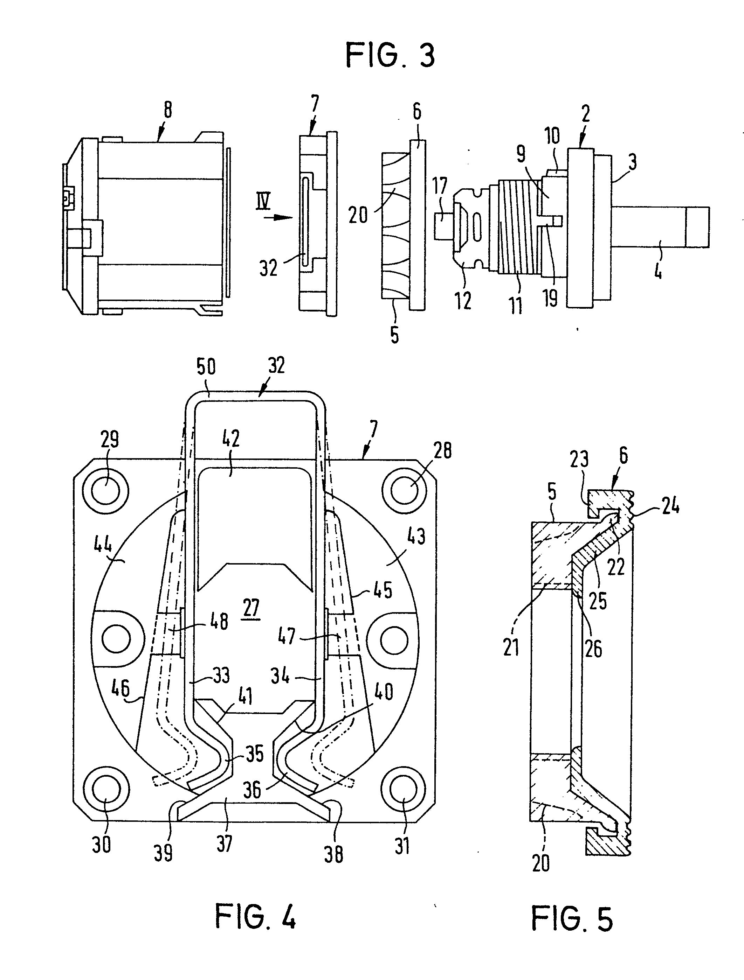

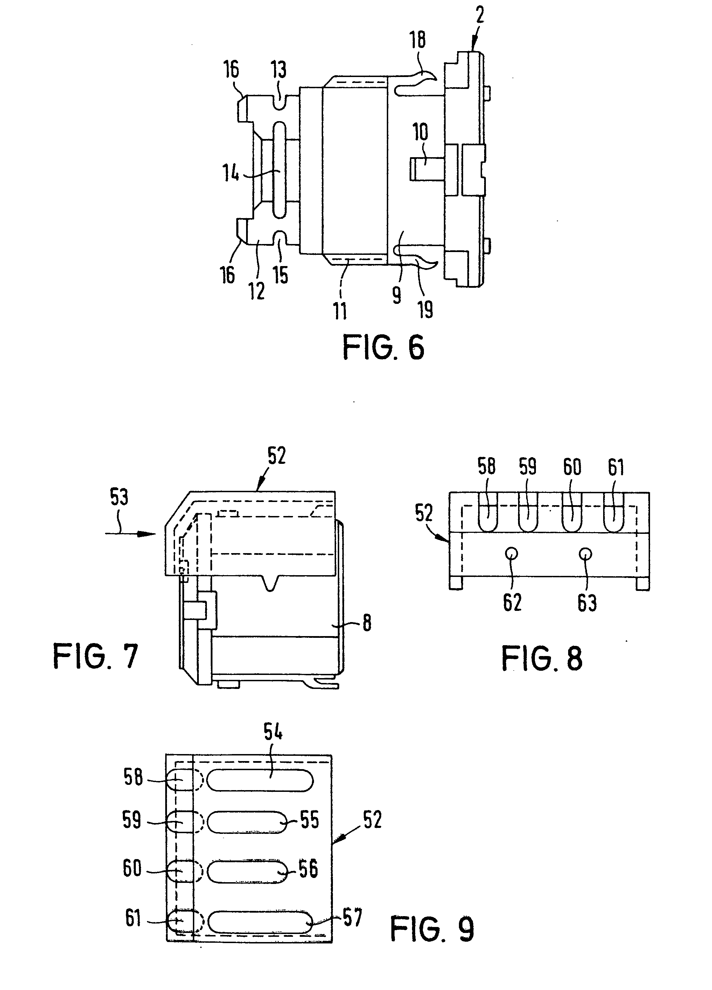

Die Figuren zeigen ein Ausführungsbeispiel eines Gerätes in Form eines Nockenschalters, welcher an einer Montageplatte 1 befestigt ist. Zu diesem Zweck ist ein Einsatzgehäuse 2 vorgesehen, welches anhand der Figur 6 weiter unten noch näher erläutert ist. An der Stirnseite 3 des Einsatzgehäuses 2 befindet sich ein Betätigungsgriff 4, der mit einem Vierkantschaft 17 (Figur 3) verbunden ist und der seinerseits in das eigentliche Gerät 8 in an sich bekannter Weise hineinragt und dort bei Drehen des Betätigungsgriffes die Drehbewegung überträgt und die Veränderung der Schaltstellung auslöst.

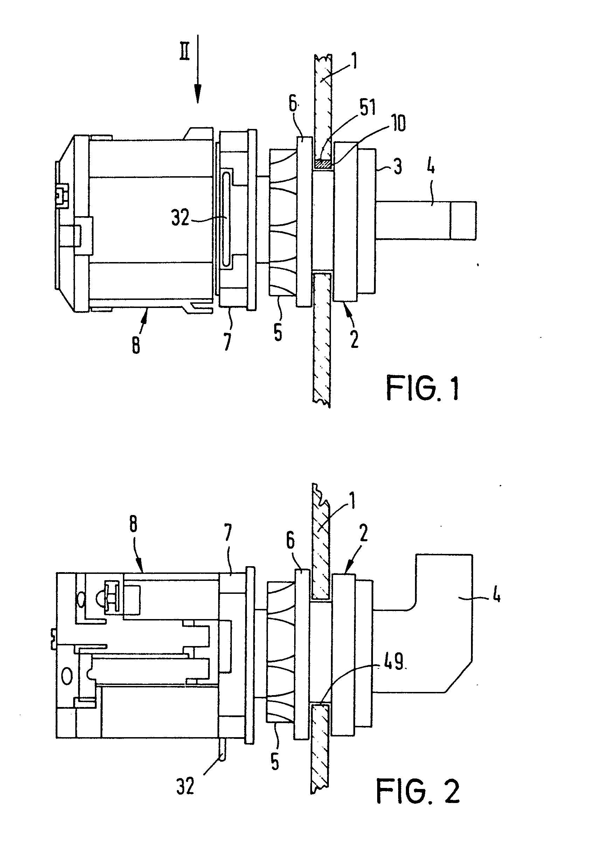

Das Einsatzgehäuse 2 wird gemäß Figur 1 und 2 von der rechten Seite also von der sichtbaren Außenseite der Montageplatte 1 durch die Bohrung 49 der Montageplatte hindurchgeführt, und zwar so, daß einmal eine Rippe 10 in eine Kerbe 51 am Rande der Bohrung eingreift, so daß das Gerät verdrehungssicher gehalten ist. Zum anderen werden die in Figur 6 deutlich dargestellten Federzungen 18, 19 beim Einschieben durch die Bohrung 49 etwas nach innen zusammengedrückt, die dann in der richtigen Stellung des Einsatzgehäuses wieder frei nach außen federn können und hinter den Rand der Bohrung 49 greifen und somit in Verbindung mit der Rippe 10 eine eindeutige Stellung des Einsatzgehäuses in der Bohrung gewährleisten. Der Monteur, der eine große Anvahl von Geräten an einer Montageplatte befestigen soll, kann also auf diese Weise zunächst eine entsprechende Anzahl von Einsatzgehäusen von der Vorderseite der Montageplatte in die reihenweise vorgesehenen Bohrungen einschieben. Er kann sodann unbedenklich auf die Rückseite der Montageplatte gehen, ohne besorgt zu sein, daß sich die jeweiligen Einsatzgehäuse durch Erschütterungen o. dgl. wieder aus ihrer Lage lösen.

Sodann wird auf der Innenseite der Montageplatte eine Klemmschraube 5 aufgeschraubt, die nach Figur 5 ein Innengewinde 21 besitzt und auf ein Außengewinde 11 des Einsatzgehäuses abgestimmt ist. Zum Erleichtern des Aufschraubens von Hand ist die Klemmschraube 5 außen mit radial verlaufenden Rippen 20 ausgestattet. An dem einen stirnseitigen Ende, welches nach der Montageplatte 1 hin zeigt, besitzt die Klemmschraube einen ringsum laufenden Wulst 22, über den ein Gummiring 6 mit einem U-förmigen Ringteil 23 übergreift. Der Gummiring besitzt ein nach innen verlaufendes konisches Anlageteil 25, mit welchem sich der Ring an einer entsprechenden konischen Schrägfläche der Klemmschraube anlegt. Der Innenrand 26 des Gummiringes ist in Figur 5 etwas übertrieben weit nach innen vorragend gezeichnet. Hierdurch soll aber verdeutlicht werden, daß dieser Innenrand in fest angeschraubter Stellung der Klemmschraube nach innen herausgequetscht wird und sich dichtend an das Einsatzgehäuse anlegt. Der Gummiring 6 gewährleistet ferner eine Abdichtung gegenüber der Montageplatte 1. Zu diesem Zweck ist die Anlagefläche des Gummiringes mit kreisförmigen Rippen 24 versehen. Nachdem das Einsatzgehäuse 2 endgültig befestigt ist, und zwar in einer Art und Weise, daß diese Befestigung auch wider schnell mit wenigen Handgriffen gelöst werden kann, kann die Befestigung des eigentlichen elektrischen Gerätes 8 erfolgen. Zu diesem Zweck ist auf der Stirnseite des Gerätes 8, die nach der Montageplatte hin weist, eine Kupplungsplatte 7 aufgeschraubt, die im wesentlichen quadratisch mit abgerundeten Ecken ausgebildet ist und die in der Mitte eine größere Ausnehmung 27 aufweist. Figur 4 veranschaulicht dieses Kupplungsplatte in vergrößertem Maßstab in Ansicht gemäß Pfeil IV in Figur 3. Nahe den Ecken der Kupplungsplatte 7 sind vier Bohrungen 28, 29, 30 und 31 vorgesehen, die im allgemeinen nicht benötigt werden. Wenn jedoch das Gerät 8 aus einer größeren Anzahl von Bauteilen zusammengesetzt ist und dadurch gegenüber Figur 1 eine sehr große Länge aufweist, kann man durch diese Bohrungen und gegebenenfalls durch weitere entsprechende nicht gezeichnete Bohrungen der Bauteile des Gerätes 8 Schraubenbolzen hindurchführen und damit eine zusätzliche Verschraubung und Befestigung vornehmen.

Von wesentlicher Bedeutung ist nun, daß auf der in Figur 4 gezeigten Seite der Kupplungsplatte 7 eine im wesentlichen U-förmige Feder 32 angeordnet und geführt ist. Der mittlere Bügel 50 der Feder 32 ragt um ein gewisses Maß aus der Kupplungsplatte 7 heraus, so daß man beispielsweise mit einem Schraubenzieher oder einem anderen geeigneten Werkzeug unter den Bügel greifen kann und die Feder 32 ein kleines Stück aus der Kupplungsplatte herausziehen kann. Alternativ kann man aber auch auf den Bügel 50 drücken und die Feder um ein gewisses Maß in die Kupplungsplatte 7 hineinschieben. In beiden Fällen erfolgt eine Spreizung der beiden Schenkel 33 und 34 der Feder 32 nach außen bis zu etwa der strichpunktiert gezeichneten Lage, wobei man sich die strichpunktiert gezeichneten Schenkel allerdings entsprechend dem Einwärts-oder Auswärtsschieben mit dem Bügel 50 mitverschoben denken muß. Die Schenkel 33, 34 der Feder 32 werden dabei in Schlitzen unterhalb der Laschen 47 und 48 geführt. Damit dieses vorerläuterte Spreizen der Federschenkel erfolgt, sind die Federschenkel nahe ihren Enden einwärts gebogen. Diese einwärts gebogenen Teile 35, 36 wirken mit einem X-förmigen Führungsansatz 37 zusammen, der auf beiden Seiten Schrägflächen 38 und 39 bzw. 40 und 41 aufweist. Wenn also die Feder 32 durch Druck auf den Bügel 50 nach unten hin gedrückt wird, so gleiten die Federteile 35, 36 an den Schrägflächen 39 und 38 entlang und die Federschenkel werden zum Spreizen gezwungen. Umgekehrt wird bei Zug des Bügels 50 der Feder 32 nach oben hin ein Spreizen der Schenkel der Feder durch Gleiten der Federteile 35, 36 an den Schrägflächen 41 und 40 bewirkt. Zur besseren Führung und Halterung und vor allem zur Begrenzung des Spreizbereiches der Federschenkel sind noch ein inneres Führungsstück 42 sowie zwei äußere Führungsstücke 43 und 44 vorgesehen, die einstückig mit der Kupplungsplatte 7 hergestellt sind. Die äußeren Führungsstücke 43, 44 besitzen schrägverlaufende Anlageflächen 45, 46, gegen die Federschenkel in äußerster Spreizstellung anschlagen können.

Mit der Kupplungsplatte 7 arbeitet das Anschlußteil 12 des Einsatzgehäuses 2 zusammen. Während der Ansatz 9 der Einsatzgehäuses entsprechend der Bohrung 49 in der Montageplatte 1 im wesentlichen zylindrisch ausgebildet ist, ist das Anschlußteil 12 mehrkantig ausgebildet, um einen verdrehsicheren Anschluß des Gerätes 8 zu gewährleisten, und zwar ist dieses mehrkantige Anschlußteil 12 auf die Konturen der Ausnehmung 27 in der Kupplungsplatte 7 abgestimmt. Außerdem besitzt dieses Anschlußteil 12 etwa halbzylindrische Kerben 13, 14 und 15. Eine vierte Kerbe, die parallel zu der Kerbe 14 verläuft, kann auf der anderen Seite des Anschlußteiles 12 gemäß Figur 6 vorgesehen sein. In die einander gegenüberliegenden Kerben greifen die Federschenkel 33, 34 in Sperrstellung ein. Wenn, wie gesagt, vier Kerben vorgesehen sind und das Anschlußteil 12 entsprechend auf die Ausnehmung 27 abgestimmt ist, kann es auch möglich sein, das Zusammenkuppeln von Kupplungsplatte und Gerät 8 einerseits und dem Einsatzgehäuse 2 andererseits in zwei definierten Stellungen vorzunehmen, die um 90° zueinander verdreht sind. Zum Erleichtern des Einschiebens der Kupplungsplatte 7 auf das Anschlußteil 12 sind an der Stirnseite Abschrägungen 16 vorgesehen. Es sei noch bemerkt, daß der Vierkantschaft 17 gegenüber Figur 3 auch wesentlich länger ausgeführt sein kann, so daß er weiter in das Gerät 8 hineinragen kann.

Die Figuren 7 bis 9 veranschaulichen schließlich noch eine vorteilhafte Ausgestaltung der Erfindung, die ebenfalls zu einer wesentlichen Erleichterung zur Befestigung des Gerätes beiträgt, und zwar dadurch, daß das eigentliche Gerät 8 mit seinen zahlreichen, im einzelnen nicht dargestellten Kontaktanschlußschrauben und Anschlußstellen für die elektrische Verdrahtung berührungssicher gemacht ist, wobei gleichzeitig das Befestigen der elektrischen Verdrahtung vereinfacht ist. Zu diesem Zweck ist auf dem Gerät 8 über dem Bereich der Kontaktanschlußschrauben und der Anschlußstellen für die elektrische Verdrahtung ein Berührungsschutz-deckel 52 aufgeschoben, und zwar erfolgt das Aufschieben zweckmäßig in Richtung des Pfeiles 53 in Figur 7. Der Berührungsschutzdeckel 52 ist im wesentlichen U-förmig gestaltet, so daß die Unterseite und die rechte Stirnseite in der Darstellung der Figur 7 offen sind. An der Oberseite sind Langlöcher 54, 55, 56 und 57 vorgesehen, durch die die Verdrahtungen hindurchgesteckt werden können. An der Stirnseite des Berührungsschutzdeckels gemäß Figur 8 finden sich weitere Löcher 58, 59, 60 und 61, die zum Hindurchführen und gleichzeitig zum Führen eines Schraubenziehers dienen und durch die man an die Kontaktanschlußschrauben herankommen kann. Die Bohrungen 62 und 63 dienen zum Hindurchführen von Befestigungsschrauben für den Berührungsschutzdeckel.

**Ansprüche**

1. Vorrichtung zum Befestigen eines elektrischen Gerätes (8), insbesondere eines Nockenschalters, an einer mit einer Bohrung (49) versehenen Montageplatte (1), dadurch gekennzeichnet, daß an dem montageplattenseitigen Stirnende des Gerätes (8) eine Kupplungsplatte (7) mit einer Feder (32) befestigt ist und daß ein von außen durch die Bohrung (49) hindurchführbares Einsatzgehäuse (2) vorgesehen ist, welches zum einen mit einer mit dem Rand der Bohrung (49) und zum anderen mit der Feder (32) der Kupplungsplatte (7) zusammenwirkenden Rastvorrichtung ausgestattet ist.

2. Vorrichtung nach Anspruch 1, dadurch gekennzeichnet, daß die Feder (32) im wesentlichen U-förmig ausgebildet ist, daß der mittlere Bügel (50) der Feder (32) aus der Kupplungstatte (7) herausragt, daß die Federschenkel (33, 34) nahre ihren Enden einwärts gebogen sind und daß die einwärts gebogenen Teile (35, 36) der Federschenkel (33, 34) mit einem X-förmigen Führungsansatz (37) mit beiderseitigen Schrägflächen (38, 39, 40, 41) derart zusammenwirken, daß beim Verschieben der Feder (32) entweder ein gewisses Maß aus der Kupplungsplatte (7) heraus oder in die Kupplungsplatte (7) hinein die Federschenkel (33, 34) voneinander gespreizt werden.

3. Vorrichtung nach Anspruch 1 oder 2, dadurch gekennzeichnet, daß die Rastvorrichtung des Einsatzgehäuses (2) für die Verbindung mit der Kupplungsplatte (7) aus einem Anschlußteil (12) gebildet ist, welches außen verdrehungssicher mit Kerben (13, 14, 15) versehen ist, in welche die Federschenkel (33, 34) eingreifen.

4. Vorrichtung nach einem der vorhergehenden Ansprüche, dadurch gekennzeichnet, daß die Rastvorrichtung des Einsatzgehäuses (2) für die Verbindung mit dem Rand der Bohrung (49) der Montageplatte (1) aus zwei einander gegenüberliegenden Federzungen (18, 19) gebildet ist, welche in Raststellung hinter den Rand der Bohrung (49) greifen, und daß auf dem Umfang des Einsatzgehäuses (2), etwa um 90° zu den Federzungen (18, 19) versetzt, eine Rippe (10) vorgesehen ist, welche in eine Kerbe (51) am Rand der Bohrung (49) eingreift.

5. Vorrichtung nach einem der vorhergehenden Ansprüche, dadurch gekennzeichnet, daß das Einsatzgehäuse (2) mit einem Außengewinde (11) versehen ist, auf welches eine Klemmschraube (5) aufschraubbar ist, und daß die Klemmschraube (5) mit einem Gummiring (6) versehen ist, welcher derart gestaltet ist, daß eine Dichtung gegenüber dem Einsatzgehäuse (2) einerseits und der Innenfläche der Montageplatte (1) andererseits gegeben ist.

6. Vorrichtung nach einem der vorhergehenden Ansprüche, dadurch gekennzeichnet, daß auf dem Gerät (8) über dem Bereich der Kontaktanschlußschrauben und der Anschlußstellen für die elektrische Verdrahtung ein- oder zweiseitig ein Berührungsschutzdeckel (52) aufgeschoben ist, welcher nahe den Kontaktanschlußschrauben Löcher (58 bis 61) für den Einsatz eines Schraubenziehers und Langlöcher (54 bis 57) zum Hindurchführen der Verdrahtung aufweist.

**Claims**

1. A device for fixing an electrical apparatus (8), more especially a cam switch, to a mounting plate (1) provided with a bore (49), characterized in that to the front end of the apparatus (8) that is at the mounting plate side there is fastened a coupling plate (7) with a spring (32), and in that there is provided an insert housing (2) which can be passed through the bore (49) from the outside and which is equipped, on the one hand, with a detenting device co-operating with the edge of the bore (49) and, on the other hand, with a detenting device co-operating with the spring (32) of the coupling plate (7).

2. A device as claimed in Claim 1, characterised in that the design of the spring (32) is substantially U-shaped, and in that the central clip (50) of the spring (32) projects from the coupling plate (7), and in that the spring legs (33, 34) are bent inwardly near their ends, and in that the inwardly bent parts (35, 36) of the spring legs (33, 34) cooperate with an X-shaped guide lug (37) with oblique surfaces (38, 39, 40, 41) on both sides in such a way that when the spring (32) is moved to a certain extent either out of the coupling plate (7) or into the coupling plate (7) the spring legs (33, 34) are forced apart.

3. A device as claimed in Claim 1 or 2, characterised in that the detenting device of the insert housing (2) for the connection to the coupling plate (7) is formed by a connection part (12) which is provided outside in a torsion-proof manner with notches (13, 14, 15), in which the spring legs (33, 34) engage.

4. A device as claimed in one of the preceding Claims, characterised in that the detenting device of the insert housing (2) for the connection to the edge of the bore (49) in the mounting plate (1) consists of two opposite spring tongues (18, 19) which, in the detended position, engage behind the edge of the bore (49), and in that there is provided on the circumference of the insert housing (2), offset by approximately 90° to the spring tongues, a rib (10) which engages in a notch (51) on the edge of the bore (49).

5. A device as claimed in one of the preceding Claims, characterised in that the insert housing (2) is provided with an external thread (11), on which a clamping screw (5) can be screwed, and in that the clamping screw (5) is provided with a rubber ring (6) which is shaped in such a way that there is provided a seal with respect to the insert housing (2), on the one hand, and to the inner surface of the mounting plate (1), on the other hand.

6. A device as claimed in one of the preceding Claims, characterised in that there has been placed on the apparatus (8), above the zone of the contact connecting screws and of the connection points for the electric wiring, on one side or on two sides, a shock-protection cover (52) which has, close to the contact connecting screws, holes (58 to 61) for the insertion of a screw driver and oblong holes (54 to 57) for passing through the wiring.

**Revendications**

1. Dispositif de fixation d'un appareil électrique (8), en particulier d'un interrupteur à cames, à une plaque de montage (1) munie d'un trou, caractérisé en ce qu'à l'extrémité frontale de l'appareil (8), située du côté de la plaque de montage, il est fixé une plaque d'accouplement (7) munie d'un ressort (32) et qu'il est prévu un boîtier d'insertion (2) pouvant passer à partir de l'extérieur à travers le trou (49) et qui est muni d'une part d'un agencement d'arrêt coopérant avec le bord du trou (49) et aussi avec le ressort (32) de la plaque d'accouplement (7).

2. Dispositif selon la revendication 1, caractérisé en ce que le ressort (32) est de forme pratiquement en U, que l'étrier central (50) du ressort (32) dépasse de la plaque d'accouplement (7), que les branches de ressort (33, 34) sont coudées vers l'extérieur au voisinage de leurs extrémités et que les parties coudées vers l'intérieur (35, 36) des branches de ressort (33, 34) coopèrent avec un appendice de guidage en X (37) muni de surfaces obliques bilatérales (38, 39, 40, 41), de telle sorte que lorsqu'on fait coulisser le ressort (32), soit dans une certaine mesure hors de la plaque d'accouplement (7), soit vers l'intérieur de la plaque d'accouplement (7), les branches de ressort (33, 34) s'écartent l'une de l'autre.

3. Dispositif selon l'une des revendications 1 ou 2, caractérisé en ce que l'agencement d'arrêt du boîtier d'insertion (2) est formé, pour la liaison avec la plaque d'accouplement (7), d'une partie de raccordement (12) qui est munie à l'extérieur, rigidement dans la rotation, d'encoches (13, 14, 15) dans lesquelles s'engagent les branches de ressort (33, 34).

4. Dispositif selon l'une des revendications précédentes, caractérisé par le fait que l'agencement d'arrêt du boîtier d'insertion (2) est formé, pour la liaison avec le bord du trou (49) de la plaque de montage (1), de deux languettes élastiques (18, 19) opposées l'une à l'autre, lesquelles s'engagent dans la position d'arrêt, derrière le bord du trou (49), et que sur la circonférence du boîtier d'insertion (2) il est prévu, avec un décalage d'environ 90° relativement aux languettes élastiques (18, 19), une nervure (10) qui s'engage dans une encoche (51) du bord du trou (49).

5. Dispositif selon l'une des revendications précédentes, caractérisé par le fait que le boîtier d'insertion (2) est muni d'un filetage extérieur (11) sur lequel peut se visser une vis de blocage (5) et que la vis de blocage (5) est munie d'un anneau en caoutchouc (6) de forme assurant l'étanchéité vis-à-vis du boîtier d'insertion (2) d'une part et de la surface intérieure de la plaque de montage (1) d'autre part.

6. Dispositif selon l'une des revendications précédentes, caractérisé par le fait que sur l'appareil (8) il est enfilé dans la région des vis de connexion et des points de raccordement du câblage électrique, d'un côté ou des deux côtés, un couvercle (52) de protection contre le toucher qui présente, près des vis de connexion, des trous (58 à 61) pour l'insertion d'un tourne-vis et des trous allongés (54 à 57) pour le passage du câblage.

FIG. 1

FIG. 2

1

# FIG. 3

# FIG. 4

# FIG. 5

FIG. 6

FIG. 7

FIG. 8

FIG. 9